(19) Europäisches Patentamt

European Patent Office

Office européen des brevets

(11) EP 0 735 697 A2

(12) EUROPÄISCHE PATENTANMELDUNG

(43) Veröffentlichungstag:
02.10.1996 Patentblatt 1996/40

(51) Int. Cl.⁶: **H04B 1/18**

(21) Anmeldenummer: 96103444.4

(22) Anmeldetag: 06.03.1996

(84) Benannte Vertragsstaaten:
DE FR GB

(30) Priorität: 09.03.1995 DE 19508429

(71) Anmelder: **Daimler-Benz Aktiengesellschaft**
**70546 Stuttgart (DE)**

(72) Erfinder:
  • **Köther, Dietmar, Dr.**
  **D-47057 Duisburg (DE)**

  • **Hopf, Bernd, Dipl.-Ing.**
  **D-47057 Duisburg (DE)**
  • **Sporkmann, Thomas, Dipl.-Ing.**
  **D-47239 Duisburg (DE)**
  • **Wolff, Ingo, Prof.**
  **D-52076 Aachen (DE)**
  • **Kosslowski, Stefan, Dr.**
  **D-89231 Neu-Ulm (DE)**

(74) Vertreter: **Weber, Gerhard, Dipl.-Phys.**
**AEG Aktiengesellschaft**
**60591 Frankfurt (DE)**

(54) **Zirkulatoranordnung**

(57)    Es wird eine Zirkulatoranordnung, insbesondere als Sende-Empfangsweiche vorgeschlagen, welche aus monolithisch auf einem Halbleitersubstrat integrierten Verstärkern mit einer Leistungsteiler-Anordnung, vorzugsweise in Koplanartechnik, aufgebaut ist.

**Beschreibung**

Die Erfindung betrifft eine Zirkulatoranordnung.

Zirkulatoranordnungen finden insbesondere Anwendung als Sende-Empfangsweiche zum Anschluß einer Sende-Empfangs-Antenne an einen Sende- und einen Empfangszweig. Gebräuchlich sind hierfür Anordnungen, welche im Zentrum einer Wellenleiterverzweigung einen Ferritkörper in einem statischen Magnetfeld aufweisen. Eine derartige Zirkulatoranordnung ist beispielsweise aus der DE 27 44 212 C2 bekannt.

Mit dem Ziel eine Sende-Empfangsweiche mit wesentlich geringerem Platzbedarf zu realisieren, ist in der DE 36 18 159 A1 eine Anordnung beschreiben, bei welcher ein Wilkinson Teiler mit seinem Eingangsanschluß an eine Antenne und mit seinen Ausgangsanschlüssen an einen Sendeoszillator bzw. eine Empfangsdiode angeschlossen ist. Eine solche Anordnung besitzt eine reziproke Streumatrix mit der unliebsamen Folge, daß Antennenempfangssignale auch in den Empfangszweig geleitet werden. Die Einsatzmöglichkeiten einer solchen Anordnung sind daher beschränkt.

Aufgabe der vorliegenden Erfindung ist es, eine demgegenüber vielseitiger einsetzbare platzsparende Zirkulatoranordnung, insbesondere für Frequenzen oberhalb 1GHz anzugeben.

Die Erfindung ist im Patentanspruch 1 beschrieben. Die Unteransprüche enthalten vorteilhafte Ausgestaltungen und Weiterbildungen der Erfindung.

Die Erfindung ermöglicht mit bewährten Mitteln der Halbleitertechnologie eine verfahrenstechnisch günstige Herstellung einer Zirkulatoranordnung, die nur einen sehr geringen Platzbedarf und eine gute Isolation der Anschlußtore aufweist. Vorteilhafterweise kann die gesamte Anordnung monolithisch auf einem Substrat integriert werden, wobei das Substrat sowohl als Grundlage für die aktiven Halbleiterschichten der Verstärkeranordnungen als auch als verlustarmer dielektrischer Träger der Wellenleiterstrukturen dient. Die Verstärkeranordnungen bilden rückwirkungsfreie Knoten der Anordnung und gewährleisten somit die für eine Zirkulatoranordnung wesentliche Rückwärtsisolation.

Ein besonderer Vorteil der Anordnung ist in der Möglichkeit zu sehen, die Halbleiterverstärker direkt gemäß den Systemanforderungen auszulegen und bei monolithischer Ausführung die einzelnen Bestandteile systemorientiert zu dimensionieren und aufeinander abzustimmen und dabei ohne zusätzliche Verstärker und/oder Impedanzanpassungselemente zu einer systemangepaßten Zirkulatoranordnung zu kommen.

Die Erfindung ist nachfolgend anhand eines bevorzugten Ausführungsbeispiels unter Bezugnahme auf die Abbildung, in welcher ein prinzipieller Aufbau einer erfindungsgemäßen Zirkulatoranordnung skizziert ist, noch eingehend veranschaulicht.

Bei der in FIG. 1 skizzierten Zirkulatoranordnung ist der Eingang des ersten Halbleiterverstärkers V1 mit dem Eingangstor T1 der Anordnung, der Ausgang des zweiten Halbleiterverstärkers V2 mit dem Ausgangstor T3 der Zirkulatoranordnung verbunden. Für die bevorzugte Anwendung als Sende-Empfangsweiche ist der erste Verstärker V1 als Leistungsverstärker für das Sendesignal und der zweite Verstärker als rauscharmer Verstärker (LNA) für ein Empfangssignal ausgelegt.

Eine Leistungsteileranordnung LT weist einen Eingangsanschluß L1 und zwei gegeneinander isolierte Ausgangsanschlüsse L2 und L3 auf. Der Eingangsanschluß L1 ist mit dem bidirektionalen Tor T2 der Zirkulatoranordnung, der Ausgangsanschluß L2 mit dem Ausgang des ersten Verstärkers V1 und der Ausgangsanschluß L3 mit dem Eingang des zweiten Verstärkers V2 verbunden. Die Verwendung der Begriffe Eingangsanschluß und Ausgangsanschluß bezieht sich dabei auf die Betrachtung der Leistungsteilerfunktion, gemäß welcher ein am Eingangsanschluß L1 eingespeistes Signal in vorgegebener Phasen- und Leistungsrelation, vorzugsweise phasengleich und zu gleichen Teilen, auf die Ausgangsanschlüsse L2 und L3 aufgeteilt wird. Es ist aber auch eine Signaleinspeisung in einen Ausgangsanschluß zulässig, wobei dann die gegenseitige Isolation der Ausgangsanschlüsse sich in der Weise zeigt, daß ein an einen Ausgangsanschluß eingespeistes Signal am anderen Ausgangsanschluß nicht auftritt. Die in der Leistungsteileranordnung LT möglichen Signalpfade sind durch die eingezeichneten Pfeile angedeutet.

Die Leistungsteileranordnung zeigt vorzugsweise ein Übertragungsverhalten, welches durch eine Streumatrix

$$S = \begin{pmatrix} 0 & a & b \\ a & 0 & 0 \\ b & 0 & 0 \end{pmatrix}$$

beschrieben werden kann, wobei die Zeilen die Signaleinspeisungsanschlüsse und die Spalten die Signalaustrittsanschlüsse repräsentieren und die Aufeinanderfolge der Anschlüsse L1, L2, L3 gilt. Die Elemente a, b sind komplexe Phasen- und Amplitudenfaktoren, für welche $a^2 + b^2 < 1$ gilt. Insbesondere können beide Faktoren gleich sein, d.h. $a = b$. Dieses stellt z.B. das Übertragungsverhalten eines allgemein bekannten Wilkinson-Kopplers dar, dessen prinzipielle Ausführung in FIG. 2 skizziert ist:

Der Eingangsanschluß L1 ist über eine Leitungsverzweigung und gleiche Transmissionsleitungen P1, P2 mit den beiden Ausgangsanschlüssen L2, L3 verbunden. Die beiden Ausgangsanschlüsse L2, L3 sind zusätzlich über eine Anpassungsimpedanz Z zwischen weiteren Leitungsverzweigungen miteinander verbunden. Für das durch die oben angegebene Streumatrix beschriebene Übertragungsverhalten sind bei vernachlässigter Phasenlaufzeit durch die Impedanz R die Transmissionsleitungen P1, P2 jeweils auf eine Phasenlaufzeit von /2 dimensioniert. Die bekannten tatsächlich realisierten Ausführungen solcher Wilkinson-Koppler sehen häufig eine Verteilung der Wirkung der Transmissionsleitungen P1, P2 und der Anpassungsimpedanz Z zusätzlich auf die Zuleitungen, Leitungsverzweigungen usw. vor, wobei auch konzentrierte Elemente wie Kondensatoren, Induktivitäten oder Kombinationen davon eingesetzt werden und Impedanzen durch geeignete Dimensionierung von Transmissionsleitungen realisierbar sind. Die Dimensionierung des Aufbaus kann dann vorteilhafterweise die Spezifikationen des Gesamtsystems mit berücksichtigen.

Die Anordnung zeigt die an eine Sende-Empfangs-Weiche gestellten Eigenschaften einer guten Signalübertragung vom Tor T1 zum Tor T2 und vom Tor T2 zum Tor T3 sowie einer hohen Signaldämpfung von Tor T2 nach Tor T1 aufgrund der Rückwirkungsfreiheit der ersten Verstärkeranordnung V1 und einer hohen Signaldämpfung von Tor T1 nach Tor T3 aufgrund der gegenseitigen Isolation der Ausgangsanschlüsse der Leistungsteileranordnung. Da keine Signalübertragung von Tor T3 nach Tor T1 vorgesehen ist, kann eine solche Anordnung auch als Quasi-Zirkulator bezeichnet werden.

Andere bekannte Ausführungsformen von Leistungsteilern wie z.B. sogenannte rat-race-Koppler sind in entsprechender Weise anwendbar.

Die monolithische Integration der Verstärkeranordnungen mit den Wellenleiterstrukturen gewährleistet eine verlustarme und störungssichere Signalführung bei geringem Platzbedarf. Die Geometrie der Anordnung ist z.B. mittels photolithographischer Verfahren mit hoher Präzision einstellbar.

Die Verstärkeranordnungen können vorteilhafterweise aus einzelnen Transistoren, vorzugsweise HEMT (high electron mobility transistor) bestehen. Als Halbleitermaterial sind insbesondere GaAs und InP von Vorteil.

Zur Realisierung der Transistoren können in an sich bekannter Weise ganzflächig mehrere dünne Halbleiterschichten auf ein semiisolierendes Substrat abgeschieden und für den vorgesehenen Transistortyp strukturiert werden. In den Bereichen außerhalb der Transistorflächen werden die aufgewachsenen Schichten in Isolationsgebiete umgewandelt, z.B. mittels an sich bekannter Implantationsverfahren.

Die Wellenleiterstrukturen einschließlich der Anschlußtore sind vorzugsweise vollständig in Koplanartechnik (CPW) ausgeführt. Bei der Koplanartechnik bestehen keine Einschränkungen hinsichtlich der Substratdicke. Das elektrische Feld, soweit es im Halbleitermaterial verläuft, ist im oberflächennahen Bereich, also z.B. in den besonders hochohmigen Isolationsgebieten konzentriert. Wechselwirkungen über das Substrat sind in der Koplanartechnik besonders gering, so daß auch bei konzentriertem Aufbau der Anordnung keine für eine Zirkulatoranordnung besonders nachteiligen Kopplungen zu befürchten sind.

Die Erfindung ist nicht auf die beschriebenen bevorzugten Ausführungsbeispiele beschränkt. Insbesondere können die Verstärker aus anderen Transistoren als HEMT und/oder als komplexe Schaltungen ausgeführt sein. Die Halbleitermaterialien sind a priori beliebig, die genannten Materialien GaAs und insbesondere InP sind für Höchstfrequenzanwendungen besonders geeignet. Neben der bevorzugten monolithischen Ausführung sind auch hybride Realisierungen möglich.

## Patentansprüche

1. Zirkulatoranordnung mit einem Eingangstor, einem Ausgangstor und einem bidirektionalen Tor, die eine Leistungsteileranordnung mit einem Eingangsanschluß und zwei gegeneinander isolierten Ausgangsanschlüssen enthält, wobei der Eingangsanschluß mit dem bidirektionalen Tor verbunden ist, dadurch gekennzeichnet, daß ein erster Halbleiterverstärker mit seinem Eingang mit dem Eingangstor der Zirkulatoranordnung und mit seinem Ausgang mit dem einen der Ausgangsanschlüsse der Leistungsteileranordnung und ein zweiter Halbleiterverstärker mit seinem Eingang mit dem anderen Ausgangsanschluß der Leistungsteileranordnung und mit seinem Ausgang mit dem Ausgangstor der Zirkulatoranordnung verbunden ist.

2. Anordnung nach Anspruch 1, dadurch gekennzeichnet, daß die Leistungsteileranordnung in MMIC-Technik ausgeführt ist.

3. Anordnung nach Anspruch 2, gekennzeichnet durch ihre vollständig monolithische Ausführung auf einem Halbleitersubstrat.

4. Anordnung nach einem der vorhergehenden Ansprüche, dadurch gekennzeichnet, daß die Leistungsteileranordnung als Wilkinson-Teiler ausgeführt ist.

5. Anordnung nach Anspruch 1 oder 2, dadurch gekennzeichnet, daß die Halbleiterverstärker als Transistoren ausgeführt sind.

6. Anordnung nach Anspruch 4, dadurch gekennzeichnet, daß die Transistoren als HEMT ausgebildet sind.

7. Anordnung nach einem der vorhergehenden Ansprüche, dadurch gekennzeichnet, daß die Halbleiterschichten für den Verstärkeraufbau als ganzflächige Schichten auf dem Substrat vorliegen, die außerhalb der aktiven Bereiche in Isolationsgebiete umgewandelt sind.

8. Anordnung nach einem der vorhergehenden Ansprüche, dadurch gekennzeichnet, daß die Wellenleiterstrukturen im Koplanartechnik ausgeführt sind.

9. Anordnung nach einem der vorhergehenden Ansprüche, gekennzeichnet durch InP als Halbleitermaterial.